# EUROPÄISCHE PATENTSCHRIFT

(11) **EP 1 674 047 B1**
(45) Veröffentlichungstag und Bekanntmachung des Hinweises auf die Patenterteilung: **25.06.2008**
(21) Anmeldenummer: 05112690.2
(22) Anmeldetag: 22.12.2005
(51) Int. Cl.: A61C 13/00, G05B 19/4065

(54) **Verfahren zur Herstellung zahntechnischer Formteile**
Method for producing dental shaped parts
Procédé de fabrication de pièces dentaires

(30) Priorität: 23.12.2004 DE 102004063417
(43) Veröffentlichungstag der Anmeldung: 28.06.2006
(73) Patentinhaber: Sirona Dental Systems GmbH, 64625 Bensheim (DE)
(72) Erfinder: Basler, Franz, 69514 Laudenbach (DE); Fornoff, Peter, 64385 Reichelsheim 3 (DE)
(74) Vertreter: Sommer, Peter

(56) Entgegenhaltungen:
- EP-A- 0 455 854
- EP-A- 1 060 712
- WO-A-01/35854
- WO-A-99/13796

## Beschreibung

### Technisches Gebiet

Die Erfindung betrifft ein Verfahren zur Herstellung zahntechnischer Formteile gemäß dem Oberbegriff des Anspruchs 1.

### Stand der Technik

Aus der EP 0 160 797 A1 ist ein Rohling zur Herstellung zahntechnischer Formteile bekannt, wobei der Rohling in einen Halter und einen Rohlingskörper aus unterschiedlichen Materialien aufgeteilt ist. An dem Halter kann eine Referenzfläche so ausgebildet sein, dass Steuerinformationen für die Bearbeitung abgeleitet werden können, die von den Rohlingseigenschaften abhängen.

Aus der DE 196 12 699 C1 ist ein weiterer Rohling zur Herstellung zahntechnischer Formteile bekannt. Auch hier ist eine Typerkennung des Rohlings durch geometrische Gestaltung der Außenkontur des Rohlings offenbart.

Aus der EP 0 455 854 A1 ist ein Rohling bekannt, aus dem zum einen der dem Patienten zu verabreichende Passkörper und zum anderen ein zusätzlicher Halte- oder Stützkörper herausgearbeitet werden kann. In den Passkörper wird dabei eine Ausnehmung eingearbeitet, die so ausgebildet ist, dass sie auf den Halte- oder Stützkörper aufsetzbar ist.

Die Lage der dem Verschleiß unterworfenen Werkzeuge zur Bearbeitung des Rohlings wird dadurch justiert, dass die Werkzeuge an definierte Referenzflächen des Rohlings herangefahren werden. Diese Referenzflächen können sich, wie in der EP 0 160 797 A1 gezeigt, am Halter befinden oder können sich, wie in der DE 196 12 699 C1 gezeigt, am Rohlingskörper oder an einem eigenen Referenzkörper befinden, der am Rohling an mehr oder weniger beliebiger Stelle angebracht wird.

In der WO 01/35854 A1 ist ein Rohling gezeigt, der eine Ausnehmung zur Aufnahme eines Indexierungsstiftes aufweist. Weiterhin ist eine Referenzfläche vorgesehen, an der die Gesamtabmaße der Werkzeuge vermessen werden können.

Die im Stand der Technik vorgesehenen Referenzflächen sind lediglich zu Justagezwecken des Werkzeugs im Bezug auf den Rohling geeignet.

Die Aufgabe der Erfindung besteht darin, eine zuverlässige Überprüfung oder Erkennung der Werkzeugbestückung und/oder des Typs und des Abnutzungszustands des eingesetzten Werkzeugs einer Bearbeitungsmaschine für den Rohling zu ermöglichen. Gerade bei Schleifmaschinen mit gleichzeitig im Einsatz befindlichen unterschiedlichen Typen von Werkzeugen sollen Fehlbestückungen erkannt werden.

### Darstellung der Erfindung

Diese Aufgabe wird erfindungsgemäß durch die Merkmale in dem kennzeichnenden Teil des unabhängigen Anspruchs gelöst, wobei zweckmäßige Weiterbildungen durch die jeweiligen Unteransprüche gekennzeichnet sind.

Bei dem erfindungsgemäßen Verfahren zur Herstellung zahntechnischer Formteile mit einem Rohlingskörper aus Zahnrestaurationsmaterial, wird das gesamte Formteil in einer Bearbeitungsmaschine durch Materialabtragung mittels mindestens zweier Werkzeuge aus dem Rohling herausgearbeitet, wobei die für die Bearbeitung ausgewählten Werkzeuge vor deren Einsatz mit Hilfe mindestens zweier am Rohling angebrachter, als Ausnehmung gestalteter Lehren gleichzeitig auf ihre Außenkontur hin überprüft werden.

Dies hat den Vorteil der Zeitersparnis bei der Erkennung der Werkzeuge anhand ihrer Außenkontur.

Ein weiterer Vorteil ergibt sich, wenn das der Lehre zugeordnete Werkzeug an die Lehre angefahren wird und der Istzustand der Abmaße des zugeordneten Werkzeugs festgestellt wird, da auf diesem Wege jedes Mal Informationen über den augenblicklich herrschenden Werkzeugzustand ermittelt werden können, wenn die Lehre/n angefahren wird. Dies kann auch mehrmals während einer Bearbeitungssequenz geschehen. So lässt sich der optimale Zustand und damit eine hohe Qualität des Formkörpers sicherstellen.

Ein weiterer Vorteil ergibt sich, wenn der Grad der Abweichung des Ist-Zustands des Werkzeugs von der idealen Außenkontur des Werkzeugs bestimmt wird und wenn diese Abweichung in die Steuerung der Bearbeitung des Rohlings einfließt. Hierfür kann beispielsweise ein Parameter gebildet werden. In einem solchen Fall kann ein Werkzeug, dessen ungeeigneter Zustand erkannt wurde, aus dem Bearbeitungsprozess ausgeschlossen werden und neue oder andere Werkzeuge in einem besseren Zustand können diese Aufgabe mit übernehmen.

Insgesamt ist hervorzuheben, dass die Lehren an beliebiger Stelle angebracht werden können und vorteilhafterweise nicht nur der Auswahl des Werkzeugs dienen, indem sie die Negativform des zur Bearbeitung vorgesehenen Werkzeugs in dessen Idealzustand abbilden, sondern dass sie auch der Bestimmung des Verschleißzustands des Werkzeugs dienen. Die genaue Lage der Lehre ist jedoch innerhalb der Bearbeitungsvorrichtung bekannt oder wird von dieser bestimmt.

Vorteilhafterweise liegen sich mindestens zwei der Lehren am Halter des Rohlings diametral gegenüber. Dies ermöglicht eine gute Erreichbarkeit der Lehren beim Einsatz des Rohlings in einer Bearbeitungsmaschine mit mindestens zwei sich im Einsatz befindlichen Werkzeugen, wenn die Werkzeuge im Wesentlichen symmetrisch zu beiden Seiten des Rohlings angeordnet sind.

Eine Möglichkeit zur Durchführung des Verfahrens ist mit einem Rohling zur Herstellung zahntechnischer Formteile gegeben, der in einer Bearbeitungsmaschine mit mindestens zwei sich im Bearbeitungsraum der Bearbeitungsmaschine befindlichen Werkzeugen bearbeitet wird. Der Rohling umfasst einen Rohlingskörper aus Zahnrestaurationsmaterial, aus welchem mittels mindestens einem der mindestens zwei Werkzeuge das Formteil durch Materialabtragung herausarbeitbar ist. Darüber hinaus weist der Rohling mindestens zwei Lehren auf, die jeweils als Ausnehmung gestaltet sind, wobei die Ausnehmungen in ihrer Geometrie so ausgebildet sind, dass das für die Bearbeitung ausgewählte Werkzeug anhand seiner Außenkontur mittels zumindest einer der Lehren erkennbar ist, wobei die mindestens zwei Lehren so am Rohling angeordnet sind, dass sie von den mindestens zwei Werkzeugen gleichzeitig anfahrbar sind, wenn der Rohling zur Bearbeitung in die Bearbeitungsmaschine eingespannt ist.

Dies hat den Vorteil, dass die Werkzeuge in einem einzigen Durchgang und damit unter erheblicher Zeitersparnis an dem bereits eingespannten Rohling überprüft werden können.

Eine alternative Ausführungsform stellt ein Rohling dar, der zur Herstellung zahntechnischer Formteile in einer Bearbeitungsmaschine bearbeitet wird und einen Rohlingskörper aus Zahnrestaurationsmaterial umfasst, aus welchem mittels mindestens zweier Werkzeuge das Formteil durch Materialabtragung herausarbeitbar ist, wobei der Rohling mindestens zwei Lehren aufweist, die als Ausnehmung gestaltet sind, wobei die Ausnehmung in ihrer Geometrie so ausgebildet ist, dass ein für die Bearbeitung ausgewähltes, sich zur Bearbeitungsseite hin verjüngendes Werkzeug, anhand seiner Außenkontur mittels der Lehre erkennbar ist. Die Ausnehmung verjüngt sich zum Grund hin und der Öffnungswinkel des einhüllenden Kegels der sich verjüngenden Ausnehmung ist mindestens gleich dem Öffnungswinkel des einhüllenden Kegels des sich zur Bearbeitungsseite hin verjüngenden Werkzeugs.

Mit dieser Ausführungsform lassen sich zur Bearbeitungsspitze hin verjüngende Werkzeuge besonders gut und zuverlässig erkennen.

Eine weitere alternative Ausführungsform betrifft einen Rohling zur Herstellung zahntechnischer Formteile in einer Bearbeitungsmaschine, der einen Rohlingskörper aus Zahnrestaurationsmaterial umfasst, aus welchem mittels mindestens zweier Werkzeuge das Formteil durch Materialabtragung herausarbeitbar ist, wobei der Rohling mindestens zwei Lehren aufweist, die als Ausnehmung gestaltet sind, wobei die Ausnehmung in ihrer Geometrie so ausgebildet ist, dass das für die Bearbeitung ausgewählte Werkzeug anhand seiner Außenkontur mittels der Lehre erkennbar ist, wobei eine weitere Ausnehmung für die Indexierung des Rohlings und für eine richtungsgebundene Positionierung des Rohlings in der Bearbeitungsmaschine vorhanden ist.

Mit einem solchen Rohling ist eine eindeutige Positionierung des Rohlings in der Bearbeitungsmaschine möglich und Fehlpositionierungen sind nahezu ausgeschlossen. Darüber hinaus erlaubt eine Indexierung die Erkennung des eingespannten Rohlingstyps durch die Bearbeitungsmaschine und die Auswahl eines für den vorgesehenen Zweck falschen Rohlings kann vermieden werden.

Diese alternativen Ausgestaltungen des Rohlings lassen sich durch eine oder mehrere der folgenden bevorzugten Weiterbildungen noch weiter verbessern.

Vorteilhafterweise ist die Lehre einer idealen Außenkontur eines ersten Werkzeugs zugeordnet, da auf diesem Wege das zur Lehre korrespondierende Werkzeug erkennbar ist. Darüber hinaus ist anhand derselben Lehre ein weiteres Werkzeug mit einer anderen idealen Außenkontur als vom ersten Werkzeug unterscheidbar erkennbar. Auf diesem Weg kann nicht nur das zur Lehre korrespondierende Werkzeug ausgewählt werden, sondern darüber hinaus können unterschiedliche Werkzeuge unterschieden werden.

Eine vorteilhafte Gestalt einer solchen Lehre kann eine Ausnehmung sein, in die die ideale Außenkontur des ersten Werkzeugs eingreift. Ein solcher Eingriff kann beispielsweise eine auf die Ausnehmung und das Werkzeug ausgelegte Passung sein.

Besonders vorteilhaft erweist es sich, wenn mindestens eine der Lehren des Rohlings eine der idealen Außenkontur eines ersten zylinderförmigen Werkzeugs mit einem ersten bearbeitungsseitigen Durchmesser entsprechende Ausnehmung aufweist, deren Durchmesser kleiner ist als die ideale Außenkontur eines zweiten zylinderförmigen Werkzeugs mit einem zweiten bearbeitungsseitigen Durchmesser. Damit sind zwei unterschiedlich dicke zylinderförmige Werkzeuge auf besonders leichte Weise voneinander zu unterscheiden.

Eine andere vorteilhafte Gestalt einer solchen Ausnehmung, die als Lehre dient, weist eine der idealen Außenkontur eines ersten, sich verjüngenden Werkzeugs entsprechende sich ebenfalls verjüngende Ausnehmung auf, wobei sich die Ausnehmung auf einen Durchmesser verjüngt, der kleiner ist als der kleinste Durchmesser der idealen Außenkontur eines zweiten zylindrischen Werkzeugs. Auf diese Weise können auch Werkzeuge unterschiedlicher Geometrie voneinander unterschieden werden. Dieses Prinzip ist selbstverständlich auch auf beliebige weitere Werkzeugformen übertragbar und beispielsweise für Werkzeuge möglich, die einen Radius an deren Ende aufweisen.

Vorteilhafterweise ist die Ausnehmung mindestens einer der Lehren so gestaltet, dass sich mit ihr ein sich stufenweise verjüngendes Werkzeug erkennen lässt. Solche Werkzeuge finden aufgrund ihrer guten Bearbeitungseigenschaften bei der Bearbeitung von Dentalkeramik immer häufiger Anwendung und die Möglichkeit der Erkennung dieser Werkzeuge wird somit zunehmend wichtiger.

Vorteilhafterweise ist die Lehre als eine Nut oder eine Bohrung ausgebildet, da diese besonders einfach herstellbar sind.

Als besonders vorteilhaft erweist es sich, wenn mindestens eine der Ausnehmungen der Lehren des Rohlings mindestens zwei Teilbereiche enthält, wobei der zweite Teilbereich innerhalb des ersten Teilbereichs liegt und die Teilbereiche einen sich zum Grund hin verjüngenden Querschnitt bilden. Eine derart ausgestaltete Lehre erweist sich als besonders vielseitig, da anhand der Mehrzahl von vorhandenen Teilbereichen besonders viele Werkzeuge voneinander unterscheidbar sind.

Besonders vorteilhaft ist es, wenn die Lehre des Rohlings so ausgebildet ist, dass beim Anfahren des der Lehre zugeordneten Werkzeugs an die Lehre der Istzustand der Abmaße des jeweils zugeordneten Werkzeugs feststellbar ist, so dass hieraus der Abnutzungsgrad des Werkzeugs beurteilt und z.B. eine bestimmte Mindestwerkzeugqualität vorgegeben werden kann. Ein weiterer Vorteil ist, dass so eine zuverlässige Überprüfung oder Erkennung der Werkzeugbestückung bzw. des Typs und Abnutzungszustands des eingesetzten Werkzeugs einer Bearbeitungsmaschine für den Rohling ermöglicht wird.

Ein weiterer Vorteil ergibt sich, wenn der Rohling einen Halteansatz zur Halterung und/oder Positionierung des Rohlingskörpers in einer Bearbeitungsvorrichtung umfasst und wenn die Lehre an dem Halteansatz angebracht ist, da hierdurch die Funktion der Lehre während des gesamten Bearbeitungsvorgangs erhalten bleibt und die korrespondierenden Werkzeuge immer wieder überprüft werden können. Werden auf diese Weise Werkzeuge von schlechter Qualität sowie Fehlbestückungen erkannt, kann beispielsweise ein Werkzeugbruch während der Bearbeitung verhindert werden.

Alternativ kann mindestens eine Lehre am Halteansatz oder dem Rohlingskörper oder an einem Referenzteil angebracht werden, wodurch fertigungstechnische Besonderheiten berücksichtigt werden können. Darüber hinaus können auch jeweils mindestens eine Lehre an mindestens zwei der bezeichneten Stellen angebracht werden.

Wenn die Lehre als Universallehre für einzusetzende Werkzeuge ausgebildet ist, können vorteilhafterweise mit einer einzigen Lehre diverse Werkzeuggeometrien überprüft werden. Als Universallehre wird im vorliegenden Fall eine Lehre bezeichnet, mit deren Hilfe die geometrische Gestalt mehrerer Werkzeuge mit Hilfe einer einzigen Lehre überprüft werden kann. Dies erfordert, dass sich die Formgeometrie selbst aus mehreren einzelnen Formgeometrien zusammensetzt, von welchen eine jede mit der Werkzeuggeometrie des ihr entsprechenden Werkzeugs korrespondiert. Hierdurch kann nicht nur eine umfangreichere Werkzeugbestückung mit Hilfe einer einzigen Lehre überprüft werden, sondern es kann auch der Abnutzungsgrad einer Vielzahl und ggf. sogar aller Werkzeuge mit Hilfe nur einer einzigen Lehre überprüft werden. Hierdurch können Fehlbestückungen bei einem besonders geringen Aufwand erkannt werden. Statt einer Universallehre können auch mehrere Universallehren gleicher oder unterschiedlicher geometrischer Gestalt Verwendung finden, beispielsweise, wenn fertigungstechnische oder steuerungstechnische Gründe dies nahe legen, um z.B. ein schnelleres Anfahren des Werkzeugs an den Rohling zu ermöglichen.

### Kurzbeschreibung der Zeichnung

Das erfindungsgemäße Verfahren wird anhand der Zeichnung erläutert. Es zeigt die:
- Fig. 1a: einen ersten Rohling zur Herstellung zahntechnischer Formteile mit einer Lehre an einem Halter eines Rohlingskörpers in perspektivischer Darstellung, die
- Fig. 1b: eine weitere Ausführungsform eines Rohlings mit einer Lehre am Rohlingskörper in perspektivischer Darstellung, die
- Fig. 1c: einen weiteren Rohling mit mindestens einer Lehre an einer am Rohling angebrachten Referenzfläche in perspektivischer Darstellung, die
- Fig. 2a: einen Rohling in einer ersten Ausführungsform im Längsschnitt, die
- Fig. 2b: einen Rohling in einer zweiten Ausführungsform im Längsschnitt, die
- Fig. 2c: einen Rohling in einer dritten Ausführungsform im Längsschnitt, die
- Fig. 3a: ein Bearbeitungswerkzeug in Form eines diamantbeschichteten Schleifers mit Zylinderform mit einem ersten Durchmesser, die
- Fig. 3b: ein Bearbeitungswerkzeug in Form eines diamantbeschichteten Schleifers mit Zylinderform mit einem zweiten Durchmesser, die
- Fig. 3c: ein Bearbeitungswerkzeug in Form eines diamantbeschichteten Schleifers mit einer spitz zulaufenden Kegelspitze, die
- Fig. 3d: ein Bearbeitungswerkzeug in Form eines diamantbeschichteten Schleifers mit einer Verjüngung und einer abgerundeten Kegelspitze, die
- Fig. 3e: ein Bearbeitungswerkzeug in Form eines diamantbeschichteten Schleifers mit mehreren zylindrischen Schleifstufen, die
- Fig. 4a: eine Lehre, mittels welcher das Bearbeitungswerkzeug gemäß Fig. 3a überprüft wird, die
- Fig. 4b: die Lehre aus 4a, mittels welcher das Bearbeitungswerkzeug gemäß Fig. 3b überprüft wird, die
- Fig. 4c: eine Lehre, mittels welcher das Bearbeitungswerkzeug gemäß Fig. 3c überprüft wird, die
- Fig. 4d: eine Lehre, mittels welcher das Bearbeitungswerkzeug gemäß Fig. 3d überprüft wird, die
- Fig. 4e: eine Lehre, mittels welcher die Abnutzung des Bearbeitungswerkzeugs gemäß Fig. 3e überprüft wird, die
- Fig. 5: eine Lehre, welche als Universallehre ausgebildet ist zur Überprüfung mehrerer Werkzeuge mit unterschiedlichen Konturen, die
- Fig. 6: eine weitere Gestalt einer als Universallehre geeigneten Lehre und die
- Fig. 7a,b: die Verschleißmessung eines Zylinderschleifers bzw. eines Kegelschleifers.

### Ausführungsbeispiel

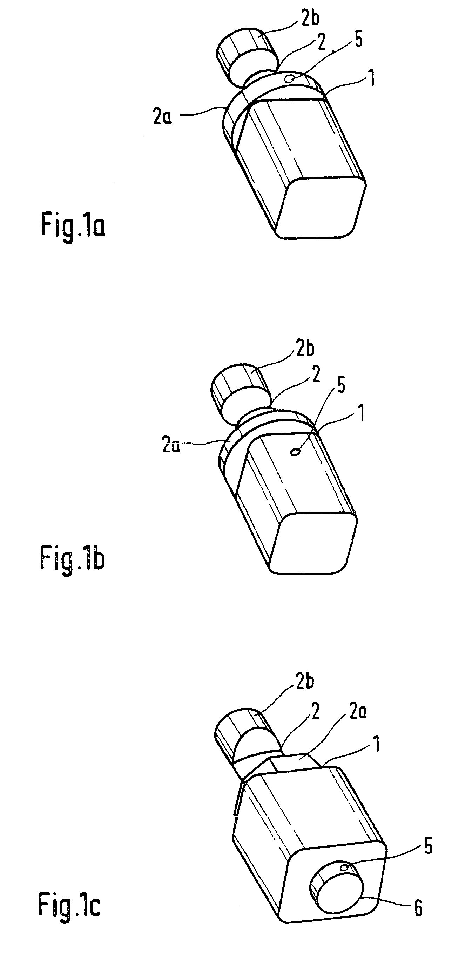

Der Rohling aus **Fig. 1a** umfasst einen Rohlingskörper 1, der aus einem in der Zahntechnik üblichen Material, z.B. Keramikmaterial, besteht, aber auch aus einem anderen beliebigen formstabilen Material wie Metall oder Kunststoff bestehen kann und aus dem durch Materialabtragung das Formteil gefertigt werden wird. Der Rohlingskörper 1 ist in seinem Querschnitt zweckmäßigerweise kreis- oder rechteckförmig. An einem stirnseitigen Ende des Rohlingskörpers 1 schließt sich in bekannter Weise ein Halter 2 an, dessen Form zylindrisch ist.

Der Halter 2 kann aus einem identischen oder einem anderen Material wie der Rohlingskörper 1 bestehen, wobei im Falle unterschiedlichen Materials der Rohlingskörper 1 auf dem Halter 2 zu befestigen ist, beispielsweise durch Kleben. Der Halteansatz 2 weist hierfür im vorliegenden Beispiel einen kreiszylindrischen Flansch 2a mit einem Durchmesser auf, die hinreichend ist, um eine sichere Befestigung am Rohlingskörper 1 zu ermöglichen, und einen Aufnahmeschaft 2b zur Befestigung in der Bearbeitungsvorrichtung. Der Aufnahmeschaft 2b ist so bemessen, dass er in eine vorbestimmte Aufnahme der Bearbeitungsmaschine passt.

In den **Fig. 1a****-c** ist eine Vertiefung 5 mit Lehrencharakter, angebracht. Derartige Vertiefungen können einzeln, oder in noch größerer Zahl an verschiedenen Stellen des Rohlings angebracht werden. Diese Vertiefungen dienen aufgrund ihres Lehrencharakters der Auswahl und der Beurteilung der einzelnen Werkzeuge, indem mit Hilfe der Vertiefungen 5 spezifische Daten des Werkzeugs, wie z.B. Abmaße, Verschleiß und Lagenbestimmung ermittelt werden.

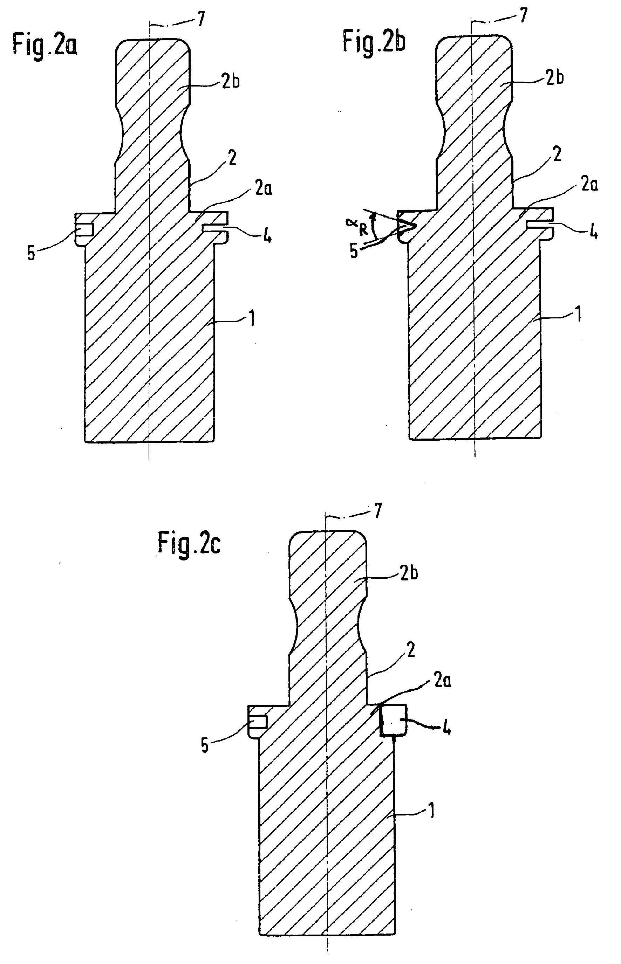

In **Fig. 2a** ist ein Rohlingskörper 1 in einer ersten Ausführungsform dargestellt. Der Rohlingskörper 1 weist zwei Lehren 4, 5 auf, die diametral gegenüberliegend im mittleren Bereich des Rohlingsskörpers 1 angeordnet sind. Die Lehren 4, 5 sind so am Rohlingskörper 1 angebracht, dass der Rohling in eine Bearbeitungsmaschine eingespannt werden kann und die Lehren trotzdem noch für die Werkzeuge beiderseits des Rohlings erreichbar sind.

In **Fig. 2b** ist ein alternativer Rohlingskörper 1 dargestellt, der eine Lehre 5 aufweist, die sich zum Grund hin verjüngt und deren einhüllenden Kegel einen Winkel aR besitzt, der größer ist als der Winkel des einhüllenden Kegels des zur Erkennung gedachten Werkzeugs. Ist der Öffnungswinkel a_{R} des einhüllenden Kegels der Lehre 5 größer als der des Werkzeugs, so wird das Werkzeug bis zum Grund der Lehre 5 eintauchen können, bevor es touchiert. Damit existiert eine eindeutige Position beim Touchieren eines solchen Werkzeugs.

In **Fig. 2c** ist ein weiterer Rohlingskörper 1 dargestellt, der neben den beiden Lehren 4, 5 noch eine weitere Ausnehmung 4' aufweist, die am Halteansatz 2 des Rohlings angeordnet ist. Diese Ausnehmung 4' dient der eindeutigen Positionierung des Rohlings 1 in einer Bearbeitungsmaschine, da der Rohling 1 bei einer entsprechend gestalteten Rohlingsaufnahme der Bearbeitungsmaschine nur in genau einer Position in die Rohlingsaufnahme eingeführt werden kann. Darüber hinaus kann die Ausnehmung 5' abhängig vom Rohlingstyp unterschiedlich gestaltet sein, so dass die Bearbeitungsmaschine den Rohlingstyp anhand dieser Ausnehmung 4' erkennen kann.

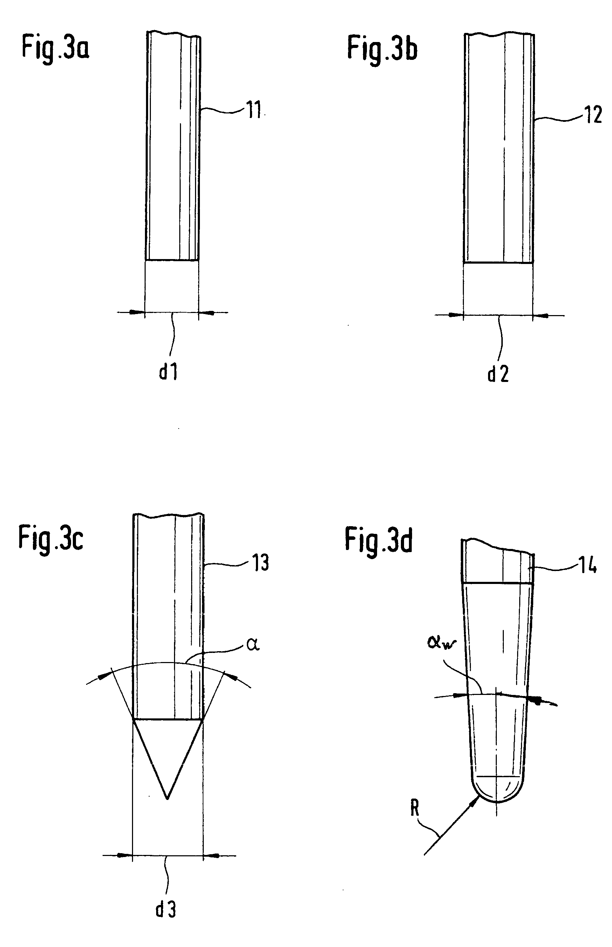

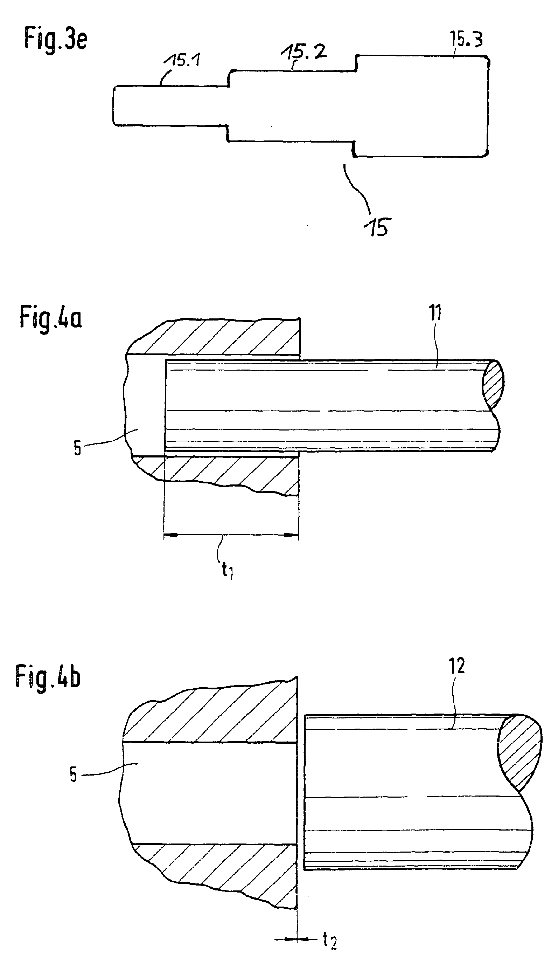

**Fig. 3** zeigt Bearbeitungswerkzeuge, wie sie zur Bearbeitung des Rohlingskörpers 1 Verwendung finden. Die Fig. 3a und 3b zeigen einen diamantbeschichteten zylindrischen Schleifer oder Fräser, wobei der Schleifer 11 aus Fig. 3a einen ersten Durchmesser d1 und der Schleifer 12 aus Fig. 3b einen zweiten Durchmesser d2 aufweist. Derart gestaltete Schleifer dienen in erster Linie zum Bearbeiten von Innenvolumina mit senkrechten Wänden.

Die **Figuren 3c** und **3d** zeigen jeweils einen sich zur Spitze hin verjüngenden diamantbeschichteten Schleifer 13, 14. In Fig. 3c weist das Ende des Schleifers 13 einen Winkel α=45° auf. In Fig. 3d verläuft das Ende des Schleifers 14 konisch und schließt am äußersten Ende mit einer Rundung mit dem Radius R ab. Der Winkel α_{W} des einhüllenden Kegels des Schleifers beträgt hier etwa 5°. Derart gestaltete Schleifer dienen in erster Linie zum Bearbeiten von Okklusionsflächen mit Fissuren, aber auch für Innenvolumen mit nicht senkrechten Wänden.

Die **Fig. 3e** zeigt einen Stufenschleifer 15, der drei Stufen 15.1, 15.2 und 15.3 aufweist, die sich zum bearbeitungsseitigen Ende hin verjüngen. Die Stufen sind jeweils zylinderförmig. Ein solcher Stufenschleifer 15 ist zur Herstellung von Zahnersatz besonders gut geeignet, da sich mit ihnen bis zu einer gewissen Tiefe senkrechte Seitenflächen herausarbeiten lassen und der Stufenschleifer 15 präziser arbeitet, da er aufgrund der stets senkrechten Auflage auf dem Rohling weniger zum Abrutschen neigt als ein Kegelschleifer. Trotzdem besitzt ein Stufenschleifer bei entsprechender Werkzeugführung die gleichen Möglichkeiten wie ein Kegelschleifer.

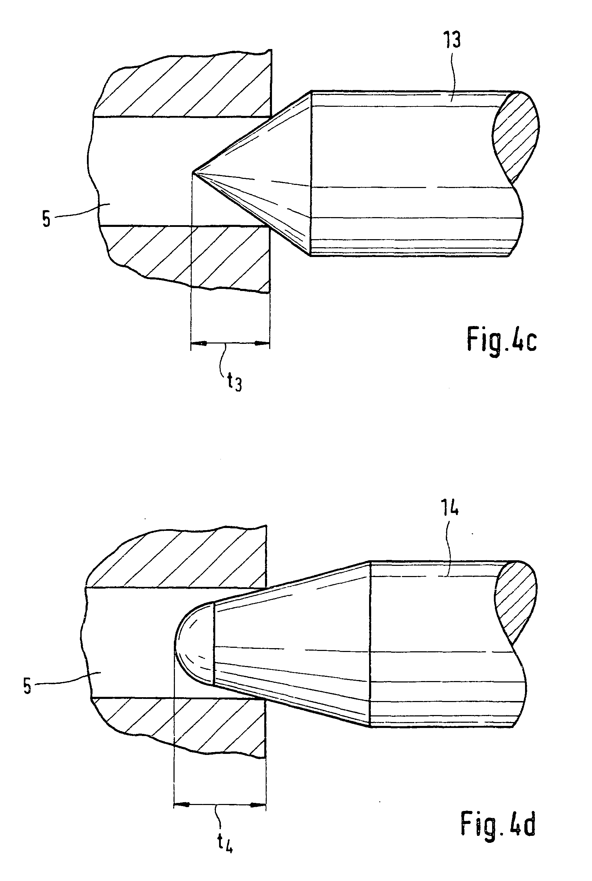

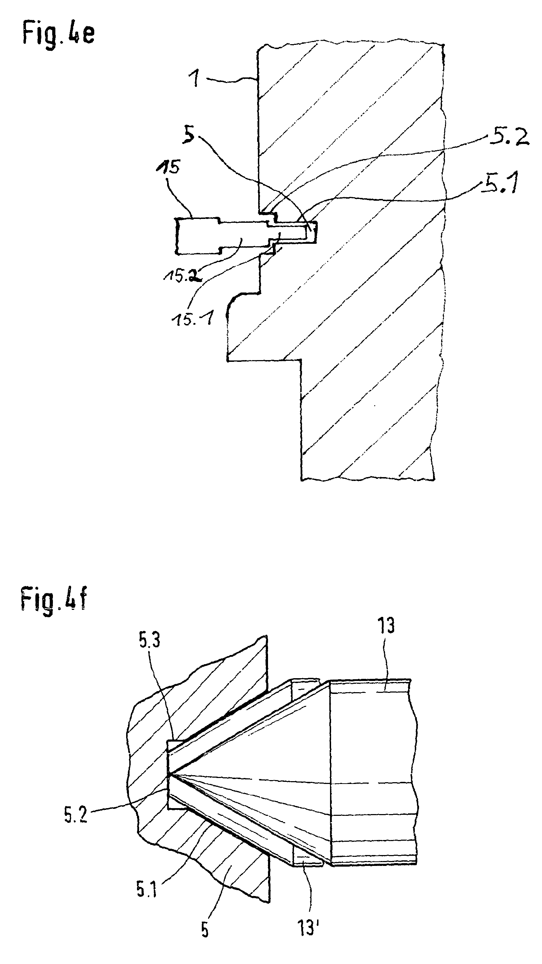

**Fig. 4** zeigt die Bearbeitungswerkzeuge aus Fig. 3 im Eingriff mit einer Lehre. Die **Fig. 4a** und **4b** zeigen einen diamantbeschichteten zylindrischen Schleifer 11, 12, wobei der Schleifer 11 um den Betrag t1 in die als Bohrung gestaltete Lehre 5 eindringt und wobei der Schleifer 12 aufgrund seines größeren Durchmessers nicht in der Lage ist, in die Lehre 5 einzudringen. Die Eindringtiefe t2 ist hier gleich null, woraus sich bestimmen lässt, dass das Werkzeug 12 vorliegt.

Die **Fig. 4c** und **4d** zeigen jeweils einen sich zur Spitze hin verjüngenden diamantbeschichteten Schleifer 13, 14 beim Eindringen in die als Bohrung gestaltete Lehre 5. Aus dem in den Figuren 4c und 4d dargestellten Eindringen um den Betrag t3 in Fig. 4c und um den Betrag t4 in Fig. 4d ergeben sich neben der Feststellung der idealen Außenkontur und damit der Festlegung des Typs des Werkzeugs auch zusätzliche Informationen über den Abnutzungszustand und über die Eignung des betreffenden Werkzeugs zum Durchführen der angezielten Bearbeitung.

Die **Fig. 4e** zeigt einen Stufenschleifer 15, der an einer dafür vorgesehenen zweistufigen Lehre 5 überprüft wird. Die zweite Stufe 5.1 der Lehre 5 liegt innerhalb der ersten Stufe 5.2 und hat einen kleineren Durchmesser als die erste Stufe 5.2. Der Durchmesser und die Tiefe der zweiten Stufe 5.1 der Lehre 5 sind so dimensioniert, dass die Stufe 15.1 an der bearbeitungsseitigen Werkzeugspitze des Stufenschleifers 15 vollständig in die zweite Stufe 5.1 der Lehre 5 eintauchen kann, aber die zweite Stufe 15.2 des Stufenschleifers 15 nicht. Die äußere, erste Stufe 5.2 der Lehre 5 ist so dimensioniert, dass die zweite Stufe 15.2 des Stufenschleifers 15 eintauchen kann. Der Stufenschleifer 15 touchiert die Lehre 5 also mit der frontseitigen Bearbeitungsfläche der zweiten Stufe 15.2 des Stufenschleifers 15 an dem Grund der ersten Stufe 5.2 der Lehre 5. Damit ist eine eindeutige Erkennung des Stufenschleifers 15 sichergestellt.

In **Fig. 4f** ist eine Lehre 5 gezeigt, die zur Verschleißerkennung der Werkzeugspitze dient. Die Lehre weist einen konischen Öffnungsbereich 5.1 auf, der in einen Bodenbereich 5.2 übergeht. Dazwischen liegt ein zylindrischer Bereich 5.3. Das neue Werkzeug 13 dringt mit seiner Kontur derart in die Lehre 5 ein, dass nur die Spitze den Boden 5.2 berührt. Ist die Spitze wie bei dem Werkzeug 13' abgenutzt, so ist die Eindringtiefe der Kontur bis zum Erreichen des Bodens 5.2. bzw. bis zur Anlage an die Seitenwände der Öffnung 5.1 größer als beim neuen Werkzeug 13. Aus diesem Maß kann daher auf den Verschleiß geschlossen werden.

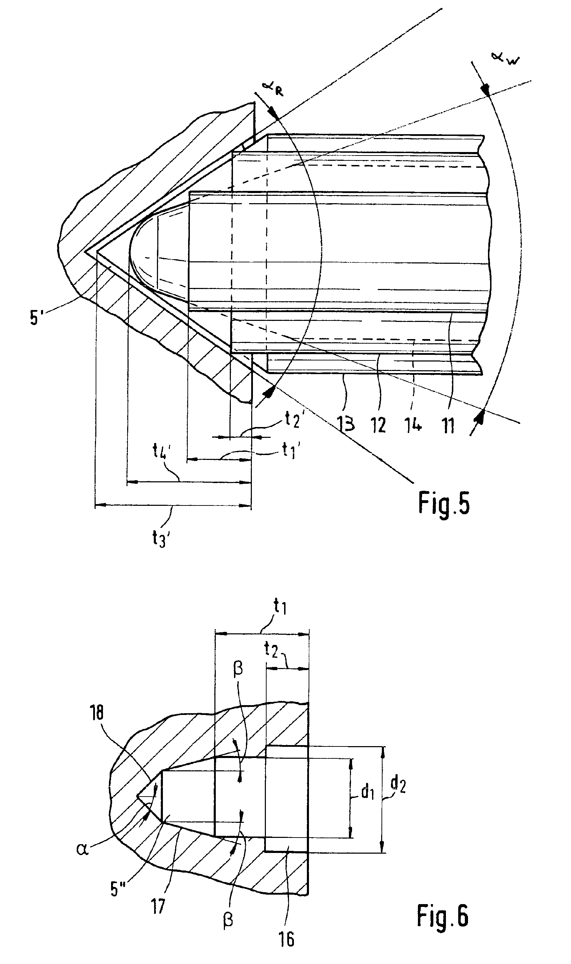

**Fig. 5** zeigt eine einzige als Universallehre gestaltete kegelförmige Aussparung 5' für die in Fig. 3a-3d dargestellten Werkzeuge 11-14. Aus der jeweiligen tatsächlichen Eindringtiefe t1', t2', t3', t4' ergeben sich Informationen über den Zustand des jeweiligen Werkzeugs und damit über die Geeignetheit des Werkzeugs für die angezielte Bearbeitung. Die Aussparung weist einen Öffnungswinkel aR auf, der größer ist als der Winkel aW de einhüllenden Kegels des Kegelschleifers 14 und gleich groß wie der nicht dargestellte Kegelwinkel des Kegelschleifers 13.

**Fig. 6** zeigt eine weitere einzige als Universallehre gestaltete Aussparung 5". Diese Aussparung umfasst eine Bohrung 16 mit dem Durchmesser d2 und der zugehörigen möglichen Eindringtiefe t2 und eine mit dem Durchmesser d1 und der zugehörigen möglichen Eindringtiefe t1. Darüber hinaus weist die Aussparung eine Abschrägung 17 um den Winkel β und eine weitere Abschrägung 18 um den Winkel α zur Prüfung korrespondierender Werkzeuge auf. Alternativ kann statt eines oder mehrerer Winkel auch eine oder mehrere Rundungen mit dem zu den entsprechend korrespondierenden Werkzeugen passenden Radien R (vgl. Bild 3d) vorgesehen sein. Aus der jeweiligen tatsächlichen Eindringtiefe ergibt sich die Information über den Zustand des jeweiligen Werkzeugs und damit über die Eignung des Werkzeugs für die angestrebte Bearbeitung.

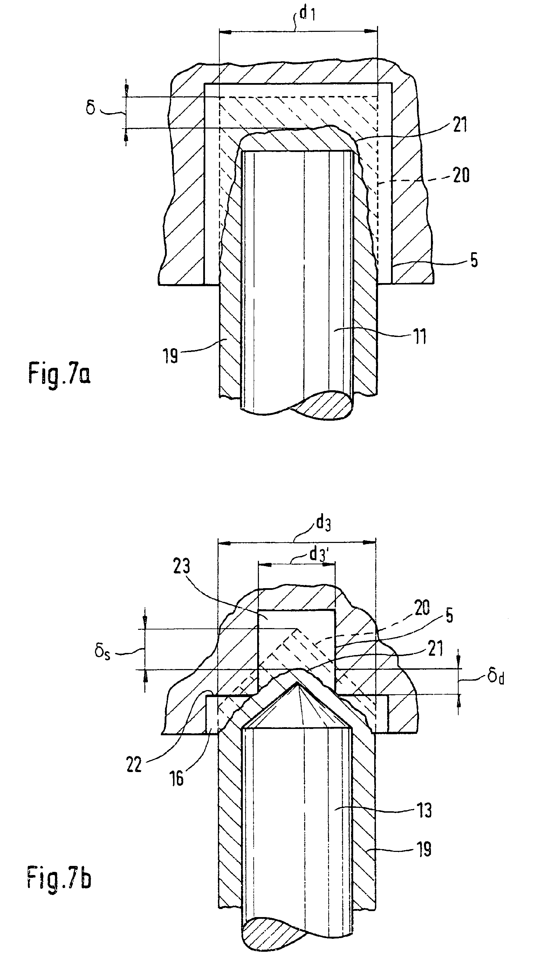

In den **Fig. 7a****,b** ist gezeigt, auf welche Art und Weise eine Verschleißmessung vorgenommen werden kann. Das Werkzeug 11 ist mit einer Beschichtung 19 versehen, in welcher die eigentlichen Schneidkanten vorgesehen sind, beispielsweise eine Diamantbeschichtung eines Schleifstiftes. Diese Beschichtung 19 weist eine ideale Außenkontur 20 auf, die durch die gestrichelten Linien angedeutet ist. Aufgrund des während der Bearbeitung auftretenden Verschleißes verfügt das Werkzeug 11 jedoch über eine tatsächliche Außenkontur 21, welche von der idealen Außenkontur 20 abweicht.

Im Bereich der stirnseitigen Bearbeitungsfläche ist zwischen der idealen Außenkontur 20 und der tatsächlichen Außenkontur 21 ein Verschleiß der Beschichtung 19 um einen Betrag α festzustellen, der bei einer ursprünglichen Beschichtungsdicke von 50 bis 60 µm durchaus 40 bis 50 µm betragen kann. Durch Messung der Eindringtiefe des Werkzeuges 11 in die Lehre 5 lässt sich der Verschleiß der vorderen Bearbeitungsfläche feststellen.

In Fig. 7b ist eine Lehre 5 dargestellt, wie sie zur Verschleißmessung eines beschichteten Kegelschleifers verwendet werden kann. Der Kegelschleifer trägt eine Beschichtung 19, welche wiederum über eine ideale und eine tatsächliche Außenkontur 20, 21 verfügt. Dank der Bohrung 16 wird zunächst der Durchmesser des verwendeten Werkzeuges 13 erkannt und aufgrund einer Anschlagfläche 22 mit einer zentralen Bohrung 23 wird der Verschleiß α_{d} des Kegelmantels bestimmt. Der Verschleiß αₛ der Kegelspitze lässt sich gemäß Fig. 7a ermitteln, kann jedoch bei Vorliegen gewisser Erfahrungswerte auch aus einer Messung gemäß Fig. 7b vorgenommen werden. Bei der Vermessung einer Kegelspitze, aber auch eines Kugelschleifers, kann für jeden Durchmesser eine eigene Lehre vorgesehen sein, wobei jeweils die Verschleißmessung über die Messung der Eindringtiefe in die Lehre erfolgt.

## Patentansprüche

1. Verfahren zur Herstellung zahntechnischer Formteile mit einem Rohlingskörper (1) aus Zahnrestaurationsmaterial, aus welchem das gesamte Formteil in einer Bearbeitungsmaschine durch Materialabtragung mittels mindestens zweier Werkzeuge (11, 12, 13, 14, 15) herausarbeitbar ist, **dadurch gekennzeichnet, dass** die für die Bearbeitung ausgewählten Werkzeuge (11, 12, 13, 14, 15) vor deren Einsatz mit Hilfe mindestens zweier am Rohling angebrachter, als Ausnehmung gestalteter Lehren (4,5) gleichzeitig auf ihre Außenkontur hin überprüft werden.

2. Verfahren nach Anspruch 1, **dadurch gekennzeichnet, dass** das der jeweiligen Lehre (4,5) zugeordnete Werkzeug (11, 12, 13, 14, 15) an die Lehre (4,5) angefahren wird und der Istzustand der Abmaße des zugeordneten Werkzeugs (11, 12, 13, 14, 15) bestimmt wird.

3. Verfahren nach Anspruch 2, **dadurch gekennzeichnet, dass** der Grad der Abweichung des Ist-Zustands des entsprechenden Werkzeugs (11, 12, 13, 14, 15) von der idealen Außenkontur des Werkzeugs (11, 12, 13, 14, 15) bestimmt wird und dass diese Abweichung in die Steuerung der Bearbeitung des Rohlings einfließt.

4. Verfahren nach einem der Ansprüche 1 bis 3, **dadurch gekennzeichnet, dass** die mindestens zwei Werkzeuge im wesentlichen symmetrisch zu beiden Seiten des Rohlings (1,2) angeordnet sind und dass mindestes zwei der Lehren (4,5) am Rohling (1, 2) diametral gegenüber liegen.

## Claims

1. A method for the production of dental shaped parts comprising a corpus (1) of tooth restoration material, from which the entire shaped part can be carved in a machining device by material removal by means of at least two tools (11, 12, 13, 14, 15), **characterized in that** the tools (11, 12, 13, 14, 15) selected for carrying out the machining operation are simultaneously inspected, before use, for contour correctness with the aid of at least two gages (4, 5) formed as recesses in the blank.

2. The method according to claim 1, **characterized in that** the tool (11, 12, 13, 14, 15) assigned to each gage (4.5) is moved into said gage (4,5) and the current state of the dimensions of said assigned tool (11, 12, 13, 14, 15) is determined.

3. The method according to claim 2, **characterized in that** the degree of deviation of the current state of said relevant tool (11, 12, 13, 14, 15) from the ideal outer contour of said tool (11, 12, 13, 14, 15) is determined and that this deviation is allowed for in the control of the machining operation on said blank.

4. The method according to any one of claims 1 to 3, **characterized in that** the at least two tools are disposed substantially symmetrically on each side of said blank (1, 2) and that at least two of said gages (4, 5)are disposed on said blank (1, 2) diametrically opposed to each other.

## Revendications

1. Procédé de fabrication de pièces préformées dentaires, avec un corps d'ébauche (1) en matière de restauration dentaire, à partir duquel l'ensemble de la pièce préformée est susceptible d'être usinée dans un centre d'usinage par enlèvement de matière au moyen d'au moins deux outils (11, 12, 13, 14, 15), **caractérisé en ce que**, avant leur utilisation, les outils (11, 12, 13, 14, 15) choisis pour l'usinage sont simultanément vérifiés au niveau de leur contour extérieur à l'aide d'au moins deux gabarits (4, 5), conçus sous forme d'évidemment, montés sur l'ébauche.

2. Procédé selon la revendication 1, **caractérisé en ce que** l'outil (11, 12, 13, 14, 15) associé au gabarit (4, 5) concerné est approché du gabarit (4, 5) et **en ce que** la position réelle de l'outil associé (11, 12, 13, 14, 15) est déterminée.

3. Procédé selon la revendication 2, **caractérisé en ce que** le taux d'écart de la position réelle de l'outil (11, 12, 13, 14, 15) correspondant par rapport au contour extérieur idéal de l'outil (11, 12, 13, 14, 15) est déterminé et **en ce que** ledit écart est prix en compte dans la commande de l'usinage de l'ébauche.

4. Procédé selon l'une quelconque des revendications 1 à 3, **caractérisé en ce que** les au moins deux outils sont sensiblement disposés de façon symétrique aux deux côtés de l'ébauche (1, 2) et **en ce qu'**au moins deux des gabarits (4, 5) sont diamétralement opposés sur l'ébauche (1, 2).
